# EUROPÄISCHE PATENTSCHRIFT

(11) **EP 1 285 233 B1**
(45) Veröffentlichungstag und Bekanntmachung des Hinweises auf die Patenterteilung: **04.04.2007**
(21) Anmeldenummer: 01943074.3
(22) Anmeldetag: 15.05.2001
(51) Int. Cl.: G01C 21/26

(54) **VERFAHREN, DATENFORMAT, CODIERUNGSVORRICHTUNG, DECODIERUNGSVORRICHTUNG UND SYSTEM**
METHOD, DATA FORMAT, ENCODING DEVICE, DECODING DEVICE AND SYSTEM
PROCEDE, FORMAT DE DONNEES, DISPOSITIF DE CODAGE, DISPOSITIF DE DECODAGE ET SYSTEME

(30) Priorität: 15.05.2000 DE 10023309
(43) Veröffentlichungstag der Anmeldung: 26.02.2003
(73) Patentinhaber: ROBERT BOSCH GMBH, 70442 Stuttgart (DE)
(72) Erfinder: HESSLING, Matthias, 31141 Hildesheim (DE); HESSING, Bernd, 31188 Holle (DE); HAHLWEG, Cornelius, 31139 Hildesheim (DE); PFEIFFER, Heinz, Werner, 31249 Hohenhameln (DE); BRANDES, Henry, 31556 Woelpinghausen (DE)
(86) Internationale Anmeldenummer: PCT/DE2001/001831
(87) Internationale Veröffentlichungsnummer: WO 2001/088479

(56) Entgegenhaltungen:
- DE-A- 19 703 610
- US-A- 5 543 789

## Beschreibung

### Stand der Technik

Die Erfindung geht aus von einem Verfahren, einem Datenformat, einer Codierungsvorrichtung, einer Decodierungsvorrichtung und einem System zur Codierung, zur Decodierung und/oder zur Übertragung von Ortsinformationen nach der Gattung der nebengeordneten Ansprüche. Es sind bereits vielfältige Formate für digitale Karten, insbesondere proprietäre oder standardisierte, bekannt. Ein Beispiel für eine standardisierte Karte ist das Format GDF. Weiterhin wurden verschiedenste Georeferenzierungsverfahren vorgeschlagen, wie z.B. in der DE 19703610.

### Vorteile der Erfindung

Das erfindungsgemäße Verfahren, Datenformat, Codierungsvorrichtung, Decodierungsvorrichtung und System mit den Merkmalen der nebengeordneten Ansprüche hat demgegenüber den Vorteil, dass geographische Objekte beliebiger Komplexität effizient codiert, interpretiert und übertragen werden können. Hierbei wird gewährleistet, dass eine eindeutige Trennung von geometrieorientierten Daten und beschreibungsorientierten Attributen erfolgt. Weiterhin ist es in vorteilhafter Weise dadurch auch möglich Kartenausschnitte zu codieren, zu decodieren und/oder zu übertragen, wobei die Kartenausschnitte geometrisch offen oder geschlossen - beispielsweise in Form von Maschen - sind. Dadurch können die geometrischen Repräsentationen in einer einzigen Abfolge, d.h. "am Stück" ausgelesen werden. Weiterhin ergibt sich dadurch, dass eine Trennung von Referenzierungen und Applikationen erreichbar ist, d.h. die erfindungsgemäß codierten Ortsinformationen werden wahlweise zum einen hauptsächlich anhand ihrer geometrieorientierten Informationen, d.h. insbesondere anhand ihrer Koordinatenketten ausgewertet, wobei die attributorientierten Beschreibungsinformationen eine untergeordnete Rolle spielen, oder andererseits vorrangig applikationsorientiert, d.h. bezüglich ihrer Attributinformationen, ausgewertet.

Weiterhin ist von Vorteil, dass die Ortungsinformationen wenigstens eine erste Koordinatenkette umfassen, wobei die erste Koordinatenkette wenigstens einen ersten, insbesondere geographischen Punkt, umfasst. Hierdurch ist es möglich, eine Ortungsinformation mit geringem Codierungsaufwand und mit hoher Genauigkeit zu codieren, decodieren und/oder zu übertragen.

Weiterhin ist es von Vorteil, dass die erste Koordinatenkette einen zweiten Punkt umfasst, wobei der erste Punkt der ersten Koordinatenkette in absoluten Koordinaten angegeben wird und wobei der zweite Punkt der ersten Koordinatenkette in relativen Koordinaten, insbesondere in Bezug auf eine Schwerpunkt-Koordinate oder in Bezug auf den ersten Punkt der ersten Koordinatenkette, angegeben wird. Hierdurch ist es möglich, Ortsinformationen auch in Form einer seriellen Darstellung entlang der Koordinatenketten zu codieren, zu decodieren und/oder zu übertragen. Weiterhin ist es dadurch möglich, eine effiziente Codierung der Ortungsinformationen zu erreichen, wodurch sich in vorteilhafter Weise ein geringerer Aufwand bei der Codierung - wie beispielsweise weniger Speicherbedarf - bei der Übertragung - wie beispielsweise geringerer Bandbreitenbedarf - und bei der Decodierung ergibt. Weiterhin ist von Vorteil, dass der erste Punkt der ersten Koordinatenkette mittels des zweiten Punktes der ersten Koordinatenkette in einer definierten Richtung interpretiert wird. Eine Richtungsinformation ergibt sich somit aus der seriellen Anordnung der Mehrzahl von Punkten einer Koordinatenkette.

Weiterhin ist von Vorteil, dass der erste Punkt der ersten Koordinatenkette mittels des zweiten Punktes der ersten Koordinatenkette in einer definierten Richtung interpretiert wird. Durch die Abfolge der eine Koordinatenkette definierenden Punkte ist eine definierte Richtungsinformation gegeben, die sich aus der Struktur der Koordinatenkette ergibt und ausgewertet werden kann.

Weiterhin ist von Vorteil, dass die Beschreibungsinformationen wenigstens ein erstes Attributfeld umfassen. Hierdurch ist es möglich, zusätzlich zu den reinen Ortungsinformationen in Form von Koordinatenketten die verschiedensten Arten anderer Informationen zu codieren, zu decodieren und zu übertragen.

Weiterhin ist von Vorteil, dass das erste Attributfeld eine Typangabe und eine Beschreibungsangabe umfasst, wobei die Beschreibungsangabe durch die Typangabe, insbesondere bezüglich des Namens, der Genauigkeit, der Richtung, der Zeit, eines POI (Point of Interest) und/oder der physischen Verbindung, bestimmt wird. Hierdurch ist es beispielsweise auch möglich, eine Genauigkeitsinformation (Accuracy) veränderlich über eine Koordinatenkette hin anzugeben. Weiterhin ist es hiermit möglich, über die Vorsehung eines Beschreibungstyps "physische Verbindung" eine Verbindung zwischen verschiedenen Koordinatenketten herzustellen.

Hiermit ist es beispielsweise auch möglich, gesamte Netze von Ortsinformationen mittels dem erfindungsgemäßen Verfahren, dem Dateiformat, der Codierungsvorrichtung, der Decodierungsvorrichtung und dem System zu codieren, zu decodieren und/oder zu übertragen. Eine solche physische Verbindung zwischen Koordinatenketten kann dabei beispielsweise einer Verzweigung entsprechen.

Weiterhin ist es von Vorteil, dass die Zuordnungsinformationen wenigstens einen ersten Zuordnungseintrag umfassen, wobei mittels des ersten Zuordnungseintrags das erste Attributfeld und der erste Punkt der ersten Koordinatenkette einander zugeordnet werden. Dadurch ist es vorteilhaft möglich, die Zuordnungsinformationen symmetrisch vorzusehen, d.h. aufgrund der Zuordnungsinformationen können die Ortsinformationen sowohl nach Koordinaten bzw. Koordinatenketten als auch nach in Beschreibungsinformationen enthaltenen Attributfeldern durchsucht werden. Das erfindungsgemäße Verfahren und das erfindungsgemäße Datenformat sind somit sowohl für geometrieorientierte Georeferenzierungsverfahren als auch für attributorientierte Georeferenzierungsverfahren geeignet.

Weiterhin ist von Vorteil, dass der erste Zuordnungseintrag sowohl eine Referenz auf das erste Attributfeld als auch eine Referenz auf den ersten Punkt der ersten Koordinatenkette umfasst. Dadurch ist es möglich, durch einen Eintrag in den Zuordnungsinformationen (Referenztabelle) genau eine Verbindung zwischen einem Punkt einer Koordinatenkette (d.h. einem "Kettenglied") und einem Attributfeld, d.h. einer Beschreibungsangabe bzw. einer Typangabe, herzustellen. Durch Hinzufügen eines weiteren Eintrags in der Liste der Zuordnungsinformationen, d.h. in der Referenztabelle, kann eine weitere Verbindung zwischen einem Punkt einer Koordinatenkette und einem Attributfeld hergestellt werden, wobei jedoch mindestens eine Referenz unterschiedlich zu allen anderen Einträgen in der Liste der Zuordnungsinformationen sein muß, d.h. entweder ist bei dem weiteren Eintrag in der Liste der Zuordnungsinformationen ein anderer Punkt aus der Menge der Ortungsinformationen referenziert oder es ist ein anderes Attributfeld der Beschreibungsinformationen referenziert.

Weiterhin ist von Vorteil, dass der erste Zuordnungseintrag entweder sowohl eine Referenz auf das erste Attributfeld als auch eine Referenz auf eine Mehrzahl von Punkten von Koordinatenketten der Ortungsinformationen oder sowohl eine Referenz auf eine Mehrzahl von Attributfeldern als auch eine Referenz auf den ersten Punkt der ersten Koordinatenkette umfasst. Hierdurch ist es möglich, die Zuordnungsinformationen zu vereinfachen - und so zu einer kompakteren Codierung der Ortsinformationen zu gelangen -, indem eine geeignete Gruppierung von Einträgen in der Liste der Zuordnungsinformationen vorgenommen wird. Beispielsweise ist dies durch Zusammenfassen von Einträgen mit gleicher Attributreferenz oder durch Zusammenfassung von Einträgen mit aufeinanderfolgender Punktfolge innerhalb einer einzigen Koordinatenkette möglich.

Weiterhin ist von Vorteil, dass das Datenpaket einen Kopfteil der Ortsinformationen und einen Datenteil der Ortsinformationen vorsieht. Hierdurch wird eine Trennung zwischen reinen Strukturinformationen des Gesamtdatenblocks und den eigentlich zu codierenden, zu decodierenden und/oder zu übertragenden Informationen ermöglicht.

Weiterhin ist es von Vorteil, dass der Kopfteil Strukturinformationen und Interpretationsvorschriften umfasst, wobei durch die Strukturinformationen die Datenstruktur der Ortsinformationen angegeben wird und wobei durch die Interpretationsvorschriften der Zweck der Ortsinformationen angegeben wird. Hierdurch wird insbesondere bei der Decodierung der Ortsinformationen eine schnellere und effizientere Verarbeitung durch Aussonderung von für einen bestimmten Verarbeitungszweck irrelevante Ortsinformationen ermöglicht.

Es ist weiterhin von Vorteil, dass die Definition wenigstens des ersten Punktes der ersten Koordinatenkette in Abhängigkeit einer Ortsinformationsanfrage definierbar ist. Hierdurch ist es möglich, die Ortsinformationen individuell und flexibel auf die Ortsinformationsanfrage hin auszurichten.

Weiterhin ist von Vorteil, dass die Ortsinformationen zumindest teilweise mit Daten einer der Decodierungsvorrichtung zugeordneten ersten Datenbank korrelierbar sind. Hierdurch ergibt sich eine Steigerung der Codierungseffizienz der Ortsinformationen, weil zumindest ein Teil der benötigten Ortsinformationen bereits in der ersten Datenbank vorhanden sind.

Weiterhin ist von Vorteil, dass Ortsinformationen, die in der ersten Datenbank nicht enthalten sind und/oder für die keine Korrelation mit Daten der ersten Datenbank möglich ist, in einer der Decodiervorrichtung zugeordneten zweiten Datenbank gespeichert werden. Hierdurch ist es erfindungsgemäß insbesondere möglich, den der Decodierungsvorrichtung zugeordneten Datenbestand in der ersten und/oder der zweiten Datenbank zu erweitern, zu aktualisieren und/oder zu vervollständigen, was die Gesamteffektivität des Verfahrens bzw. des Systems erhöht, weil dadurch identische Anfragen zu aufeinanderfolgenden Zeitpunkten, wodurch identische Ortsinformationen übertragen würden, vermieden werden können.

### Zeichnung

Ein Ausführungsbeispiel der Erfindung ist in der Zeichnung dargestellt und in der nachfolgenden Beschreibung näher erläutert. Es zeigen
Figur 1 ein erfindungsgemäßes System mit einer Codierungsvorrichtung und einer Decodierungsvorrichtung zur Codierung, zur Decodierung und/oder zur Übertragung von Ortsinformationen,
Figur 2 ein erfindungsgemäßes System mit einem Sender und einem Empfänger von Ortsinformationen,
Figur 3 ein erfindungsgemäßes System mit zwei Sendeempfängern von Ortsinformationen,
Figur 4 ein Datenpaket gemäß dem erfindungsgemäßen Datenformat zur Codierung, zur Decodierung und zur Übertragung von Ortsinformationen und
Figur 5 eine Darstellung des Informationsinhaltes eines Datenpakets.

### Beschreibung des Ausführungsbeispiels

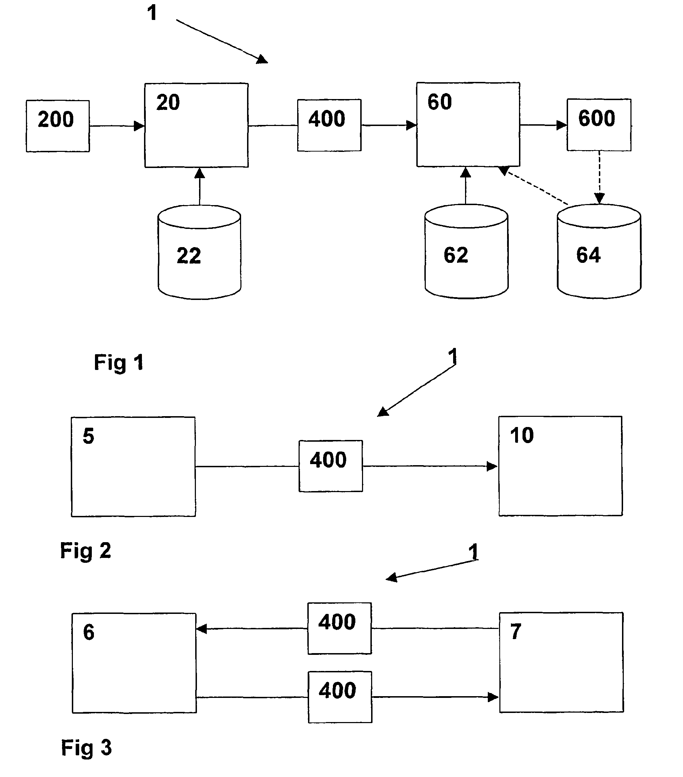

In Figur 1 ist ein erfindungsgemäßes System 1 zur Codierung, zur Decodierung und zur Übertragung von Ortsinformationen dargestellt. Das erfindungsgemäße System 1 umfasst eine Codierungsvorrichtung 20 und eine Decodierungsvorrichtung 60. Die Codierungsvorrichtung 20 überträgt auf einem Übertragungsweg wenigstens ein Datenpaket 400 zur Decodierungsvorrichtung 60. Der Decodierungsvorrichtung 60 ist eine erste Datenbank 62 zugeordnet, wobei die Decodierungsvorrichtung 60 bei der Decodierung des Datenpakets 400 auf in der ersten Datenbank 62 gespeicherte Daten zurückgreift. Die Decodierungsvorrichtung 60 liefert als Ergebnis der Decodierung des Datenpakets 400 ein Decodierungsergebnis 600. In einer besonders vorteilhaften Ausführungsform der Erfindung kann es vorgesehen sein, dass das Decodierungsergebnis 600 ganz oder teilweise in einer ebenfalls der Decodierungsvorrichtung 60 zugeordneten zweiten Datenbank 64 gespeichert wird. In einer weiteren vorteilhaften Ausführungsform der Erfindung ist darüber hinaus vorgesehen, dass die in der zweiten Datenbank 64 gespeicherten Daten zusammen mit der in der ersten Datenbank 62 gespeicherten Daten zur Decodierung des Datenpakets 400 in der Decodierungsvorrichtung 60 herangezogen werden. Das optionale Vorhandensein der zweiten Datenbank 64 wie auch der optionale Einsatz der in der zweiten Datenbank 64 gespeicherten Daten zur Decodierung des Datenpakets 400 in der Decodierungsvorrichtung 60 ist in der Figur 1 dadurch dargestellt, dass vom Decodierungsergebnis 600 zur zweiten Datenbank 64 und von der zweiten Datenbank 64 zur Decodierungsvorrichtung 60 jeweils gestrichelte Pfeile weisen.

Der Übertragungsweg ist dabei als beliebiger Übertragungsweg vorgesehen. Hierunter wird erfindungsgemäß sowohl eine drahtgebundene als auch eine drahtlose Übertragung verstanden. Insbesondere ist jedoch vorgesehen, eine drahtlose Übertragung des Datenpaketes 400 über eine Funkverbindung zu realisieren. Hierbei ist weiterhin insbesondere vorgesehen, eine Funkverbindung gemäß eines Standard zur drahtlosen Datenübertragung, beispielsweise DECT, GSM, UMTS, GPRS, Infrarot zu verwenden. Zur drahtgebundenen Übertragung des Datenpakets 400 ist insbesondere eine Übertragung über ein IP-Netzwerk, beispielsweise über Internet vorgesehen.

Erfindungsgemäß ist die erste Datenbank 62 insbesondere als Festwertspeicher, insbesondere als CD-ROM, Magnetband, magnetooptische Platte und dergleichen vorgesehen, wobei die zweite Datenbank 64 als wiederbeschreibbarer Speicher vorgesehen ist. In einer vorteilhaften Ausführungsform der Erfindung kann es jedoch auch vorgesehen sein, die erste und zweite Datenbank 62, 64 physisch in einen einzigen Speicher zusammen zu fassen, der beispielsweise durchgängig als Schreib-/Lesespeicher vorgesehen ist oder der in einem ersten Teil als Nurlesespeicher - entsprechend einer Verwendung als erster Datenbank 62 - und in einem zweiten Teil als Schreib-/Lesespeicher - entsprechend einer Verwendung als zweiter Datenbank 64 - vorgesehen ist.

Beim erfindungsgemäßen System 1 ist es weiterhin vorgesehen, dass der Codierungsvorrichtung 20 eine dritte Datenbank 22 zugeordnet ist. Die dritte Datenbank 22 ist dabei entweder als Festwertspeicher, d.h. als Nurlesespeicher, oder als Schreib-/Lesespeicher ausgebildet, je nach Verwendungszweck der dritten Datenbank 22. Wenn beispielsweise vorgesehen ist, dass zur Codierung des Datenpakets 400 in der Codierungsvorrichtung 20 lediglich statische Informationen aus der dritten Datenbank 22 benötigt werden, kann es - insbesondere aus Kostengründen - vorteilhaft sein, die dritte Datenbank 22 als Nurlesespeicher, beispielsweise als optische oder magnetooptische Platte auszubilden. Andererseits kann es sinnvoll sein, die dritte Datenbank 22. entweder ganz oder teilweise als Schreib-/Lesespeicher vorzusehen, so dass es möglich ist, in die dritte Datenbank, vorzugsweise in regelmäßigen Zeitabständen, aktuelle Daten zu schreiben, die bei der Codierung des Datenpakets 400 in der Codierungsvorrichtung 20 zusammen mit dem "Altdatenbestand" in der dritten Datenbank 22 berücksichtigt werden.

Der Anlaß für die Codierung des Datenpakets 400 durch die Codierungsvorrichtung 20 ist erfindungsgemäß insbesondere dadurch gegeben, dass der Codierungsvorrichtung 20 eine Ortsinformationsanfrage 200 zugeleitet wird. Es kann jedoch auch vorgesehen sein, dass die Codierungsvorrichtung 20 - beispielsweise in regelmäßigen Zeitabständen - das Datenpaket 400 codiert und zur Decodierungsvorrichtung 60 überträgt, wobei selbstverständlich der Informationsinhalt des Datenpakets 400 in der Regel bei dieser regelmäßigen Abfolge von Übertragungsvorgängen jeweils unterschiedlich ist.

In Figur 2 ist ein erfindungsgemäßes System 1 mit einem Sender 5 und einem Empfänger 10 von Ortsinformationen dargestellt. Hierbei wird vom Sender 5 das Datenpaket 400 zum Empfänger 10 übertragen. Hierfür ist es vorgesehen, entweder im Sender 5 eine Codierungsvorrichtung 20 - gegebenenfalls mit einer ihr zugeordneten dritten Datenbank 22 - vorzusehen oder aber dem Sender 5 eine solche Codierungsvorrichtung 20 zuzuordnen. Entsprechend ist für den Empfänger 10 vorgesehen, dass entweder in ihm eine erfindungsgemäße Decodierungsvorrichtung 60 integriert ist oder eine solche ihm zugeordnet ist. In diesen beiden Fällen umfasst die erfindungsgemäße Decodierungsvorrichtung 60 dann gegebenenfalls die erste Datenbank 62 und/oder die zweite Datenbank 64.

Der Sender 5 kann in der Figur 2 beispielsweise einen Diensteanbieter darstellen, der das Datenpaket 400 in Form einer Rundfunkaussendung an die Teilnehmer eines entsprechenden Dienstes überträgt. In diesem Fall ist der Empfänger 10 ein solcher Teilnehmer des vom Diensteanbieter bereitgestellten Dienstes. Bei den angesprochenen Diensten handelt es sich insbesondere um Navigations- und/oder Verkehrsinformationsdienste. Der in Figur 2 dargestellte Empfänger 10 von Ortsinformationen ist erfindungsgemäß insbesondere als Teilnehmer eines Dienstes, der die Übertragung von Ortsinformationen entweder benötigt oder bereitstellt, insbesondere ein Land- oder Wasserfahrzeug, bzw. ein Benutzer, der eine Ortsinformation benötigt.

In Figur 3 ist das erfindungsgemäße System 1 mit einem ersten Sendeempfänger 6 und einem zweiten Sendeempfänger 7 dargestellt. Hierbei ist in Figur 3 vorgesehen, dass sowohl der erste Sendeempfänger Informationen in Form des Datenpakets 400 zum zweiten Sendeempfänger 7 als auch der zweite Sendeempfänger 7 Informationen in Form des Datenpakets 400 zum ersten Sendeempfänger 6 überträgt. Selbstverständlich ist der Informationsinhalt der jeweiligen Datenpakete 400 in der Regel ein unterschiedlicher, je nach dem, ob das Datenpaket 400 vom ersten Sendeempfänger zum zweiten Sendeempfänger übertragen wird oder umgekehrt.

In einem Ausführungsbeispiel ist der zweite Sendeempfänger 7 als Kraftfahrzeug ausgelegt, das einen bestimmten Navigations- bzw. Verkehrstelematikdienst benötigt, so dass Ortsinformationen, beispielsweise über die am günstigsten zu wählende Straßenroute bei einer vorgegebenen Stausituation bzw. Verkehrsflußsituation im betroffenen Straßennetz vom zweiten Sendeempfänger 7 benötigt werden. Hierzu sendet der zweite Sendeempfänger 7 Daten in Form des Datenpaketes 400 zum ersten Sendeempfänger 6, der beispielsweise als Diensteanbieter für Navigations- oder Verkehrstelematikdienste ausgebildet ist. Das Datenpaket 400, das der erste Sendeempfänger 6 empfängt, enthält beispielsweise eine Ortsinformation über die Start- und die Zielposition des zweiten Sendeempfängers 7. Daraufhin werden Daten codiert, die als das Datenpaket 400 vom ersten Sendeempfänger 6 zum zweiten Sendeempfänger 7 übertragen werden, wobei dieses Datenpaket 400 die zum Zeitpunkt der Codierung günstigste Routenführung umfasst.

Als weiteren Anwendungsfall der Erfindung ist vorgesehen, daß ein Benutzer mit einem Navigationssystem bei einem Serviceprovider eine Anfrage bzgl. des nächstgelegenen Parkhauses stellt, da die Datenbasis über die der Benutzer, beispielsweise im Navigationssystem, verfügt, keine Parkhausinformationen vorsieht. Dem Serviceprovider wird zu diesem Zweck die Eigenposition des Benutzers übermittelt. Erfindungsgemäß wird diese Eigenposition aus der Datenbasis des benutzerseitigen Navigationssystems ermittelt, sie kann jedoch auch beispielsweise mittels GPS (Global positioning system) ermittelt werden. Der Serviceprovider übermittelt dem Benutzer das Datenpaket 400 mit einem Informationsinhalt, der es dem benutzerseitigen Navigationssystem erlaubt, das Parkhaus zu finden. Hierbei ist es erfindungsgemäß zum einen möglich, daß dem Serviceprovider eine Information darüber zugesandt wird, welches Navigationssystem und welche Datenbasis (insbesondere welcher Aktualisierungszustand) benutzerseitig vorhanden sind, zum anderen ist es erfindungsgemäß auch vorgesehen, daß eine solche Information dem Serviceprovider nicht zugänglich gemacht wird und bei der Codierung des Datenpakets 400 sinnvolle Annahmen über den Dateninhalt der Datenbasis bzw. über das Navigationssystem des Benutzers gemacht werden.

Es ist also in Figur 3 vorgesehen, dass sowohl der erste Sendeempfänger 6 als auch der zweite Sendeempfänger 7 jeweils eine Codierungsvorrichtung 20 und eine Decodierungsvorrichtung 60 - gegebenenfalls mit hierfür zugeordneten Datenbanken 22, 62, 64 - umfassen. Hierbei codiert die Codierungsvorrichtung 20 des zweiten Sendeempfängers 7 zunächst das Datenpaket 400, das vom zweiten Sendeempfänger 7 zum ersten Sendeempfänger 6 gesendet wird. Im ersten Sendeempfänger 6 wird dieses Datenpaket 400 in dessen Decodierungsvorrichtung 60 decodiert und in die Ortsinformationsanfrage 200 übersetzt, die daraufhin der Codierungsvorrichtung 20 des ersten Sendeempfängers 6 zur Verfügung gestellt wird. Die Codierungsvorrichtung 20 des ersten Sendeempfängers 6 codiert daraufhin das vom ersten Sendeempfänger 6 zum zweiten Sendeempfänger 7 zu übertragende Datenpaket 400, das nach der Übertragung zum zweiten Sendeempfänger 7 von dessen Decodierungsvorrichtung 60 decodiert wird, woraufhin die Decodierungsvorrichtung 60 des zweiten Sendeempfängers 7 das Decodierungsergebnis 600 zur weiteren Benutzung, beispielsweise zur Anzeige oder zur Speicherung bereithält.

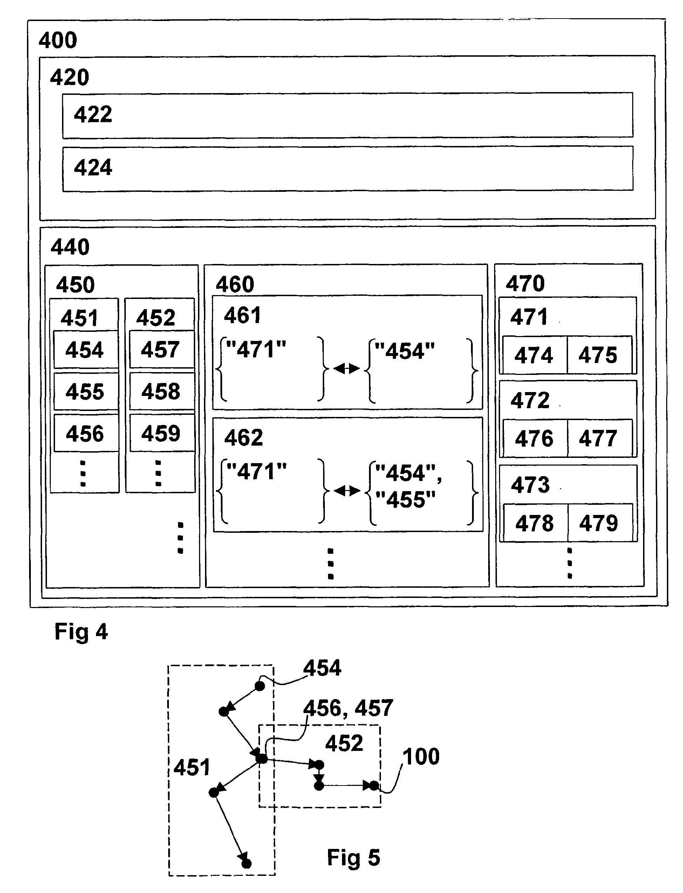

In Figur 4 ist die Struktur des Datenpakets 400 dargestellt. Das erfindungsgemäße Datenformat zur Codierung, zur Decodierung und zur Übertragung von Ortsinformationen bedient sich solcher Datenpakete 400 zur Übertragung der Ortsinformationen. Das Datenpaket 400 ist gegliedert in einen Kopfteil 420 und in einen Datenteil 440. Der Kopfteil 420 umfasst seinerseits Strukturinformationen 422 und gegebenenfalls Interpretationsvorschriften 424. Der Kopfteil 420 wird auch als Header 420 bezeichnet. Im Header 420 wird durch die Strukturinformationen 422 die Datenstruktur des Datenpakets 400 angegeben. Damit ist die strukturelle Interpretation gesichert.

Die Interpretationsvorschriften 424 dienen dazu, die im Datenpaket 400 gelieferten Dateninhalte als solche richtig interpretieren zu können. Hierzu ist es sinnvoll, eine Aussage über den Zweck des Inhalts zu liefern. Beispielsweise ist an dieser Stelle eine Information darüber sinnvoll, ob es sich beim Informationsinhalt des Datenpakets 400 beispielsweise um ein Teilnetz einer digitalen Karte, einen POI (Point of Interrest), eine Staumeldung etc. handelt. Diese Angabe über den Zweck des Dateninhalts des Datenpakets 400 kann insbesondere mittels eines Typenkatalogs erfolgen, so dass die verschiedenen möglichen Dateninhalte eindeutig erkannt werden.

Der Datenteil 440 des Datenpakets 400 gliedert sich grundsätzlich in Ortungsinformationen 450, Beschreibungsinformationen 470 und Zuordnungsinformationen 460. Hierbei ist erfindungsgemäß vorgesehen, dass die Ortungsinformationen 450 und die Beschreibungsinformationen 470 innerhalb des Datenpakets 400 getrennt voneinander vorliegen bzw. übertragen werden, d.h. beispielsweise bei der Übertragung des Datenpakets 400 und hier insbesondere des Datenteils 440 werden beispielsweise zunächst die Ortungsinformationen 450, anschließend die Beschreibungsinformationen 470 und im Anschluß daran die Zuordnungsinformationen 460 übertragen oder es werden diese drei Informationsarten in einer unterschiedlichen Reihenfolge, jedoch nicht untereinander gemischt, übertragen.

Die Ortungsinformationen 450 umfassen eine beliebige Anzahl von Koordinatenketten, wofür in der Figur 4 stellvertretend eine erste Koordinatenkette 451 und eine zweite Koordinatenkette 452 angegeben sind. Ausdrücklich ist auch vorgesehen, dass die Ortungsinformationen 450 keine Koordinatenketten 451, 452 umfassen und daß der Datenteil 440 des betreffenden Datenpakets 400 somit keine Ortungsinformationen 450 umfasst. Die Koordinatenketten 451, 452 umfassen ihrerseits eine beliebige Anzahl von Punkten, wobei für die erste Koordinatenkette 451 stellvertretend für die beliebige Anzahl von Punkten ein erster Punkt 454 der ersten Koordinatenkette 451, ein zweiter Punkt 455 der ersten Koordinatenkette 451 und ein dritter Punkt 456 der ersten Koordinatenkette 451 angegeben sind. Entsprechend ist für die beliebige Anzahl von Punkten der zweiten Koordinatenkette 452 ein erster Punkt 457 der zweiten Koordinatenkette 452, ein zweiter Punkt 458 der zweiten Koordinatenkette 452 und ein dritter Punkt 459 der zweiten Koordinatenkette 452 angegeben. Es ist insbesondere vorgesehen, dass eine Koordinatenkette lediglich einen Punkt umfasst.

Durch die Abfolge der Punkte in den Koordinatenketten 451, 452 wird eine Richtungsinformation angegeben. Die Punkte einer Koordinatenkette bezeichnen in der Regel einen geographischen Punkt, wobei dieser Punkt in der Regel durch Koordinatenangaben bezüglich eines Koordinatennetzes, beispielsweise auf der Erdoberfläche, definiert ist. Hierbei ist es erfindungsgemäß insbesondere vorgesehen, zur Erhöhung der Codierungseffizienz für die erste Koordinatenkette 451 einen Punkt, beispielsweise den ersten Punkt 454 in absoluten Koordinaten anzugeben und die nachfolgenden Punkte 455, 456 in Bezug auf den ersten Punkt 454 lediglich noch mit relativen Koordinaten anzugeben. Eine weitere Möglichkeit besteht darin, einen Punkt einer Koordinatenkette durch die Differenzkoordinate zu seinem Vorgängerpunkt anzugeben, d.h. den Differenzvektor zwischen dem Vorgängerpunkt und dem zu definierenden Punkt anzugeben. Weiterhin besteht auch die Möglichkeit, für eine Koordinatenkette eine Schwerpunktskoordinate, die in absoluten Koordinaten angegeben wird, zu bilden und die Definition der Punkte relativ zu der Schwerpunktskoordinate vorzunehmen.

Die Beschreibungsinformationen 470 umfassen eine beliebige Anzahl von Attributfeldern, wofür in Figur 4 beispielhaft ein erstes Attributfeld 471, ein zweites Attributfeld 472 und ein drittes Attributfeld 473 stehen. Es kann auch vorgesehen sein, dass die Beschreibungsinformationen 470 keine Attributfelder umfassen, so dass der Datenteil 440 des betreffenden Datenpakets 400 keine Beschreibungsinformationen 470 umfaßt. Das erste Attributfeld 471 umfasst eine Typangabe 474 des ersten Attributfelds 471 und eine Beschreibungsangabe 475 des ersten Attributfelds 471. Das zweite Attributfeld 472 umfasst ebenfalls eine Typangabe 476 des zweiten Attributfelds und eine Beschreibungsangabe 474 des zweiten Attributfelds 472. Genauso umfasst das dritte Attributfeld 473 eine Typangbe 478 des dritten Attributfelds und eine Beschreibungsangabe 479 des dritten Attributfelds. Durch die Typangaben 474, 476, 478 wird die Art der Information, die in den jeweiligen Attributfeldern 471, 472, 473 enthalten sind, festgelegt. Hierbei kann es sich erfindungsgemäß insbesondere um einen Namen, eine Genauigkeit einer Richtung, eine Zeit, ein POI (Point of Interrest) und/oder eine physische Verbindung handeln. Bei den Beschreibungsangaben 475, 477, 479 handelt es sich dann um die der jeweiligen Typangabe entsprechenden Informationen.

Beispielsweise enthält eine Beschreibungsangabe 475, 477, 479 die Angabe einer Zeit in einem entsprechenden Datenformat, wenn die entsprechende Typangabe 474, 476, 478 den Typ einer Zeitangabe beinhaltet.

Weitere Beispiele für Beschreibungsangaben 475, 477, 479 bzw. für Typangaben 474, 476, 478 sind:
- "is desired object": Im Kopfteil 420 wurde bereits eine Interpretationshilfe gegeben. Das eigentlich zu referenzierende Objekt (d.h. ein oder mehrere geometrische Punkt(e) 454 bis 459) kann auch als solches explizit gekennzeichnet werden.
- Objekte sind nach ihrer "Verwendungsmöglichkeit" gekennzeichnet. Beispielsweise wird für ein Objekt in den Beschreibungsinformationen 470 des Datenpakets 400 die Information codiert, daß dieses Objekt lediglich zur Darstellung, aber nicht zum "Matchen", d.h. zur Korrelationsbildung mit Daten einer Datenbasis, heranziehbar ist.
- Ausgezeichnete Punkte, die senderseitig für wichtig befunden werden, sollten als solche markierbar sein.
- Es ist vorgesehen, Kreuzungspunkte in einem Netz einer digitalen Karte entweder als physische Verbindung oder als eine weitere Kategorie vom Typ "Kreuzung" zu behandeln.

Die Zuordnungsinformationen 460 umfassen eine beliebige Anzahl von Zuordnungseinträgen, wobei in Figur 4 stellvertretend hierfür ein erster Zuordnungseintrag 461 und ein zweiter Zuordnungsantrag 462 dargestellt sind. Es kann insbesondere auch vorgesehen sein, dass die Zuordnungsinformationen 460 keine Zuordnungseinträge umfassen, so dass der Datenteil 440 des betreffenden Datenpakets keine Zuordnungsinformationen 460 umfasst. Die Zuordnungsinformationen 460 sind erfindungsgemäß insbesondere in Form einer Tabelle darstellbar. Jeder Zuordnungseintrag umfasst hierbei eine Referenz sowohl auf einen Punkt 454 bis 459 als auch auf ein Attributfeld 471, 472, 473. Hierdurch wird eine Verbindung in Form einer Zuordnung zwischen einem Punkt 454 bis 459 einer Kooordinatenkette 451, 452 und den Angaben eines Attributfeldes 471, 472, 473 hergestellt. Hierbei ist es erfindungsgemäß vorgesehen, sowohl zugelassen, dass ein Zuordnungseintrag 461, 462 eine Verbindung zwischen genau einem Punkt 454 bis 459 und genau einem Attributfeld 471 bis 473 hergestellt wird als auch zugelassen, daß eine Zuordnung zwischen einer Anzahl von mehreren Punkten 454 bis 459 und genau einem Attributfeld 471 bis 473 oder aber zwischen genau einem Punkt 454 bis 459 und einer Anzahl von mehreren Attributfeldern 471 bis 473 zugelassen wird. Hierdurch erhöht sich die Codierungseffizienz. Dies ist insbesondere durch besagte Zusammenfassung von Zuordnungseinträgen, die sich dadurch auszeichnen, dass der Informationsinhalt ihres Attributfeldes identisch ist oder die sich dadurch auszeichnen, dass sie sich auf aufeinanderfolgende Punkte beziehen, gegeben. Durch eine Gruppierung solcher Einzelzuordnungseinträge" zu einem einzigen Gruppenzuordnungseintrag" lässt sich eine Komprimierung erreichen.

Eine Referenz auf einen Punkt 454 bis 459 einer Koordinatenkette 451, 452 ist vorteilhaft durch die Angabe der Nummer der Koordinatenkette 451, 452 und den Listenplatz des Punktes 454 bis 459 innerhalb der Kette möglich. Entsprechend ist die Referenz auf ein Attributfeld in vorteilhafter Weise erfindungsgemäß durch dessen Nummer bzw. dessen Listenplatz gegeben. Durch die Zuordnungseinträge 461, 462 sind die Zuordnungsinformationen 460 als Kreuzreferenzierung ausgebildet, was in vorteilhafterweise in Tabellenform dargestellt werden kann.

Falls sowohl die Ortungsinformationen 450 als auch die Zuordnungsinformationen 460 als auch die Beschreibungsinformationen 470 jeweils keine Einträge enthalten, ist der Datenteil 440 des betreffenden Datenpakets 400 leer, was erfindungsgemäß auch vorgesehen ist. In diesem Fall wird diese Tatsache im Kopfteil 420 des Datenpakets 400 codiert. Die Strukturinformationen 422 des Kopfteils 420 enthalten hierbei beispielsweise eine Angabe bezüglich der Länge (beispielsweise in Bytes) des Kopfteils 420, eine Angabe über die Länge (beispielsweise in Byte) der Interpretationsvorschrift 422 des Kopfteils 420, eine Angabe über die Anzahl der Koordinatenketten 451, 452 innerhalb der Ortungsinformationen 450 und eine Angabe über die Anzahl der Punkte, die jede der Koordinatenketten umfasst, eine Angabe über die Anzahl der Zuordnungseinträge 461, 462 innerhalb der Zuordnungsinformationen 460 und eine Angabe über die Anzahl und die jeweilige Länge (beispielsweise in Bytes) der Attributfelder 471 bis 473 der Beschreibungsinformationen 470. Durch diese Strukturangaben im Kopfteil 420 betreffend den Datenteil 440 des Datenpakets 400 ist auch ein getrennter Zugriff auf einzelne Informationsarten des Datenteils 440 möglich.

Figur 5 ist eine Darstellung des Informationsinhaltes eines Datenpakets 400. Die erste Koordinatenkette 451 umfaßt eine Anzahl von Punkten, die in der Figur 5 durch einen ersten mit dem Bezugszeichen 451 versehenen Rahmen aus gestrichelten Linien eingerahmt sind. Unter den Punkten der ersten Koordinatenkette 451 befindet sich zunächst der erste Punkt 454 der ersten Koordinatenkette 451, von dem aus ein Pfeil zum nicht bezeichneten zweiten Punkt der ersten Koordinatenkette 451 weist. Vom zweiten Punkt der ersten Koordinatenkette 451 weist wiederum ein Pfeil zum dritten Punkt 456 der ersten Koordinatenkette 451 und von dort zu einem nicht bezeichneten vierten Punkt der Koordinatenkette 451 und so fort. Beim dritten Punkt 456 der ersten Koordinatenkette 451 zweigt die zweite Koordinatenkette 452 ab, deren Punkte in Figur 5 durch einen zweiten mit dem Bezugszeichen 452 versehenen Rahmen aus gestrichelten Linien eingerahmt sind. Vom ersten Punkt 457 der zweiten Koordinatenkette 452 weist wiederum ein Pfeil zum nicht bezeichneten zweiten Punkt der zweiten Koordinatenkette 452 und von dort weiter zum nicht bezeichneten dritten Punkt der zweiten Koordinatenkette 452. Vom dritten Punkt der zweiten Koordinatenkette 452 weist ein Pfeil zu einem vierten Punkt der zweiten Koordinatenkette 452, der im Beispiel gleichzeitig der letzte Punkt der zweiten Koordinatenkette 452 ist und ein Ziel 100, beispielsweise ein Kaufhaus, ein Parkhaus, allgemeiner ein POI (point of interest), angibt.

Im in der Figur 5 dargestellten Beispiel bezeichnen der dritte Punkt 456 der ersten Koordinatenkette 451 und der erste Punkt 457 der zweiten Koordinatenkette 452 denselben geografischen Punkt. Es wird also zwischen diesen beiden Punkten eine physische Verbindung, oder auch ein "physical link" hergestellt. Die Information über die physische Verbindung ist in den Beschreibungsinformationen 470 des Datenpakets 400 abgelegt und wird mittels der Zuordnungsinformationen 460 des Datenpakets den genannten zwei Punkten 456, 457 wie oben beschrieben zugeordnet. Hierdurch ist es insbesondere möglich, ganze Netze, die digitalen Karten entsprechen, mittels des erfindungsgemäßen Datenformats zu codieren, zu decodieren und zu übertragen.

Unter Codierung des Datenpakets 400 wird insbesondere verstanden:
- das Versetzen des eigentlichen, d.h. insbesondere durch die Ortsinformationsanfrage 200 angefragten, Objekts mit einem entsprechenden Umfeld an Ortungs- oder Beschreibungsinformationen durch ein geeignetes Retrieval, d.h. durch eine Korrelationsbildung mit den Daten der Datenbasis, auf die dritte Datenbank 22,
- die Überführung der diese Daten repräsentierenden Geometrie in einen geeigneten Satz von Koordinatenketten 451, 452 oder allgemeiner in einen geeigneten Satz von Ortungsinformationen 450,
- die Überführung relevanter Bezeichner aus der dritten Datenbank 22 in formatgemäße Attributfelder 471, 472, 473,
- die Markierung relevanter Teile (z.B. "is desired object", POI),
- die Erstellung der Zuordnungsinformationen 460, insbesondere in Form einer Kreuzreferenztabelle
- die Erstellung von Header 420 und Datenteil 440.

Die Codierung kann jedoch in einer einfacheren Ausführungsform auch lediglich einen Teil dieser Schritte umfassen. Insbesondere ist dies dort von Vorteil, wo lediglich standardisierte oder lediglich für einen sehr speziellen Anwendungszweck vorgesehene Datenpakete 400 codiert werden müssen. Beispielsweise könnte dies dort der Fall sein, wo ein Benutzer, beispielsweise in einem Kraftfahrzeug, Verkehrsinformationen bezüglich einer zu befahrenden Strecke abfragt. Hier genügt es bei der Codierung des Datenpaketes 400, das vom Benutzer, beispielsweise über Mobilfunk zu einem Diensteanbieter übertragen werden soll, vorzusehen, daß das Datenpaket 400 lediglich die Start- und Zielkoordinaten zusammen mit der Information, daß es sich bei den Koordinaten um Start- und Zielkoordinaten handelt, überträgt.

Unter Decodierung des Datenpakets 400 wird insbesondere verstanden:
- ein Vergleich der im Datenpaket 400 enthaltenen geometrischen Informationen mit dem Dateninhalt der ersten Datenbank 62 und/oder der zweiten Datenbank 64, wobei hier insbesondere geeignete Korrelationsverfahren (matching) zum Einsatz kommen; das Ergebnis ist ein Satz von Referenzen auf die der Decodierungsvorrichtung 60 zugeordnete erste und oder zweite Datenbank 62, 64. Erfindungsgemäß ist insbesondere auch vorgesehen,
- eine geometrische Konsistenzüberprüfung auf gegebenenfalls neu anzubindende geometrische Objekte durchzuführen,
- mit den insbesondere in den Beschreibungsinformationen 470 des Datenpakets vorhandenen Attributen ein Retrieval im Sinne von Stringvergleichen auf der ersten und/oder zweiten Datenbank 62, 64 durchzuführen, wobei als Ergebnis wiederum Referenzen auf diese Datenbanken erwartet werden,
- eine Überprüfung der Konsistenz zwischen geometrieorientierten Informationen und beschreibungsorientierten Informationen mittels der Zuordnungsinformationen 460 des Datenpakets 400 kreuzweise durchzuführen,
- geometrieorientierte und/oder beschreibungsorientierte Informationen, insbesondere neu anzubindende Objekte samt Referenzen, in der zweiten Datenbank 64 zu speichern.

## Patentansprüche

1. Verfahren zur Codierung, zur Decodierung und/oder zur Übertragung von Ortsinformationen, wobei die Ortsinformationen in einem Datenpaket (400) codiert, decodiert und/oder übertragen werden und wobei die Ortsinformationen sowohl Ortungsinformationen (450) als auch Beschreibungsinformationen umfassen, **dadurch gekennzeichnet, dass** das Datenpaket (400) getrennt Ortungsinformationen (450) und Beschreibungsinformationen (470) enthält und dass das Datenpaket (400) Zuordnungsinformationen (460) zur Zuordnung wenigstens eines Teils der Ortungsinformationen (450) zu wenigstens einem Teil der Beschreibungsinformationen (470) aufweist.

2. Verfahren nach Anspruch 1, **dadurch gekennzeichnet, dass** die Ortungsinformationen (450) wenigstens eine erste Koordinatenkette (451) umfassen, wobei die erste Koordinatenkette (451) wenigstens einen ersten, insbesondere geografischen, Punkt (454) umfaßt.

3. Verfahren nach Anspruch 2, **dadurch gekennzeichnet, dass** die erste Koordinatenkette (451) einen zweiten Punkt (455) umfasst, wobei der erste Punkt (454) der ersten Koordinatenkette (451) in absoluten Koordinaten angegeben wird und wobei der zweite Punkt (455) der ersten Koordinatenkette (451) in relativen Koordinaten, insbesondere in Bezug auf eine Schwerpunkt-Koordinate oder in Bezug auf den ersten Punkt (454) der ersten Koordinatenkette (451), angegeben wird.

4. Verfahren nach Anspruch 3, **dadurch gekennzeichnet, dass** der erste Punkt (454) der ersten Koordinatenkette (451) mittels des zweiten Punktes (455) der ersten Koordinatenkette (451) in einer definierten Richtung interpretiert wird.

5. Verfahren nach einem der vorhergehenden Ansprüche, **dadurch gekennzeichnet, dass** die Beschreibungsinformationen (470) wenigstens ein erstes Attributfeld (471) umfassen.

6. Verfahren nach Anspruch 5, **dadurch gekennzeichnet, dass** das erste Attributfeld (471) eine Typangabe (474) und eine Beschreibungsangabe (475) umfasst, wobei die Beschreibungsangabe (475) durch die Typangabe (474), insbesondere bezüglich des Namens, der Genauigkeit, der Richtung, der Zeit, eines POI (Point of Interest) und/oder der physischen Verbindung, bestimmt wird.

7. Verfahren nach einem der Ansprüche 2-6, **dadurch gekennzeichnet, dass** die Zuordnungsinformationen (460) wenigstens einen ersten Zuordnungseintrag (461) umfassen, wobei mittels des ersten Zuordnungseintrags (461) das erste Attributfeld (471) und der erste Punkt (454) der ersten Koordinatenkette (450) einander zuordnet werden.

8. Verfahren nach Anspruch 7, **dadurch gekennzeichnet, dass** der erste Zuordnungseintrag (461) sowohl eine Referenz auf das erste Attributfeld (471) als auch eine Referenz auf den ersten Punkt (454) der ersten Koordinatenkette (451) umfasst.

9. Verfahren nach Anspruch 7 oder 8, **dadurch gekennzeichnet, dass** der erste Zuordnungseintrag (461) entweder sowohl eine Referenz auf das erste Attributfeld (471) als auch eine Referenz auf eine Mehrzahl von Punkten (454 bis 459) von Koordinatenketten (451, 452) der Ortungsinformationen (450) oder sowohl eine Referenz auf eine Mehrzahl von Attributfeldern (471, 472) als auch eine Referenz auf den ersten Punkt (454) der ersten Koordinatenkette (451) umfasst.

10. Verfahren nach einem der vorhergehenden Ansprüche, **dadurch gekennzeichnet, dass** das Datenpaket (400) einen Kopfteil (420) der Ortsinformationen und einen Datenteil (440) der Ortsinformationen vorsieht.

11. Verfahren nach Anspruch 10, **dadurch gekennzeichnet, dass** der Kopfteil (420) Strukturinformationen (422) und Interpretationsvorschriften (424) umfasst, wobei durch die Strukturinformationen (422) die Datenstruktur der Ortsinformationen angegeben wird und wobei durch die Interpretationsvorschriften (424) der Zweck der Ortsinformationen angegeben wird.

12. Datenformat zur Codierung, zur Decodierung und zur Übertragung von Ortsinformationen, zur Anwendung in einer Vorrichtung nach einem der Ansprüche 13-18, **dadurch gekennzeichnet, dass** das Datenformat getrennt Ortungsinformationen (450) und Beschreibungsinformationen (470) enthält und dass es Zuordnungsinformationen (460) zur Zuordnung wenigstens eines Teils der Ortungsinformationen (450) zu wenigstens einem Teil der Beschreibungsinformationen (470) aufweist.

13. Codierungsvorrichtung (20) zur Codierung von Ortsinformationen, **dadurch gekennzeichnet, dass** Mittel vorgesehen sind, die Ortsinformationen in ein Datenpaket codieren, welches getrennt Ortungsinformationen (450) und Beschreibungsinformationen (470) enthält und dass das Datenpaket (400) Zuordnungsinformationen (460) zur Zuordnung wenigstens eines Teils der Ortungsinformationen (450) zu wenigstens einem Teil der Beschreibungsinformationen (470) aufweist.

14. Codierungsvorrichtung (20) nach Anspruch 13, **dadurch gekennzeichnet, dass** die Definition wenigstens des ersten Punktes (454) der ersten Koordinatenkette (451) in Abhängigkeit einer Ortsinformationsanfrage (200) definierbar ist.

15. Decodierungsvorrichtung (60) zur Decodierung von Ortsinformationen, **dadurch gekennzeichnet, dass** Mittel vorgesehen sind, die in einem Datenpaket (400) codierte Ortsinformationen dekodieren, wobei das Datenpaket getrennt Ortungsinformationen (450) und Beschreibungsinformationen (470) enthält und dass das Datenpaket (400) Zuordnungsinformationen (460) zur Zuordnung wenigstens eines Teils der Ortungsinformationen (450) zu wenigstens einem Teil der Beschreibungsinformationen (470) aufweist.

16. Decodierungsvorrichtung (60) nach Anspruch 15, **dadurch gekennzeichnet, dass** die Ortsinformationen zumindest teilweise mit Daten einer der Decodierungsvorrichtung (60) zugeordneten ersten Datenbank (62) korrelierbar sind.

17. Decodierungsvorrichtung (60) nach Anspruch 16, **dadurch gekennzeichnet, dass** Ortsinformationen, die in der ersten Datenbank (62) nicht enthalten sind und/oder für die keine Korrelation mit Daten der ersten Datenbank (62) möglich ist, in einer der Decodierungsvorrichtung (60) zugeordneten zweiten Datenbank (64) gespeichert werden.

18. System (1) zur Codierung, zur Decodierung und zur Übertragung von Ortsinformationen, **dadurch gekennzeichnet, daß** das System eine Codierungsvorrichtung (20) nach einem der Ansprüche 13 bis 14 und eine Decodierungsvorrichtung (60) nach einem der Ansprüche 15 bis 17 aufweist.

## Claims

1. Method for encoding, decoding and/or transmitting location information, the location information being encoded, decoded and/or transmitted in a data packet (400), and the location information comprising both locating information (450) and description information, **characterized in that** the data packet (400) contains locating information (450) and decryption information (470) separately, and **in that** the data packet (400) has assignment information (460) for assigning at least some of the locating information (450) to at least some of the description information (470).

2. Method according to Claim 1, **characterized in that** the locating information (450) comprises at least a first coordinate chain (451), the first coordinate chain (451) comprising at least a first, in particular geographic, point (454).

3. Method according to Claim 2, **characterized in that** the first coordinate chain (451) comprises a second point (455), the first point (454) of the first coordinate chain (451) being specified in absolute coordinates, and the second point (455) of the first coordinate chain (451) being specified in relative coordinates, in particular with respect to a centre of gravity coordinate or with respect to the first point (454) of the first coordinate chain (451).

4. Method according to Claim 3, **characterized in that** the first point (454) of the first coordinate chain (451) is interpreted by means of the second point (455) of the first coordinate chain (451) in a defined direction.

5. Method according to one of the preceding claims, **characterized in that** the description information (470) comprises at least a first attribute field (471).

6. Method according to Claim 5, **characterized in that** the first attribute field (471) comprises a type specification (474) and a description specification (475), the description specification (475) being determined by the type specification (474), in particular with respect to the name, the accuracy, the direction, the time, a POI (Point Of Interest) and/or the physical connection.

7. Method according to one of Claims 2-6, **characterized in that** the assignment information (460) comprises at least a first assignment entry (461), the first attribute field (471) and the first point (454) of the first coordinate chain (450) being assigned to one another by means of the first assignment entry (461).

8. Method according to Claim 7, **characterized in that** the first assignment entry (461) comprises both a reference to the first attribute field (471) and a reference to the first point (454) of the first coordinate chain (451).

9. Method according to Claim 7 or 8, **characterized in that** the first assignment entry (461) comprises either both a reference to the first attribute field (471) and a reference to a multiplicity of points (454 to 459) of coordinate chains (451, 452) of the locating information (450) or both a reference to a multiplicity of attribute fields (471, 472) and a reference to the first point (454) of the first coordinate chain (451).

10. Method according to one of the preceding claims, **characterized in that** the data packet (400) provides a header part (420) of the location information and a data part (440) of the location information.

11. Method according to Claim 10, **characterized in that** the header part (420) comprises structure information (422) and interpretation rules (424), the structure information (422) specifying the data structure of the location information and the interpretation rules (424) specifying the purpose of the location information.

12. Data format for encoding, decoding and transmitting location information for use in a device according to one of Claims 13-18, **characterized in that** the data format contains locating information (450) and description information (470) separately, and **in that** it has assignment information (460) for assigning at least some of the locating information (450) to at least some of the description information (470).

13. Encoding device (20) for encoding location information, **characterized in that** means are provided which encode the location information into a data packet which contains locating information (450) and description information (470) separately, and **in that** the data packet (400) has assignment information (460) for assigning at least some of the locating information (450) to at least some of the description information (470).

14. Encoding device (20) according to Claim 13, **characterized in that** at least the first point (454) of the first coordinate chain (451) can be defined as a function of a location information enquiry (200).

15. Decoding device (60) for decoding location information, **characterized in that** means are provided which decode location information encoded in a data packet (400), the data packet containing locating information (450) and description information (470) separately, and **in that** the data packet (400) has assignment information (460) for assigning at least some of the locating information (450) to at least some of the description information (470).

16. Decoding device (60) according to Claim 15, **characterized in that** the location information can be correlated at least partially with data from a first data base (62) which is assigned to the decoding device (60).

17. Decoding device (60) according to Claim 16, **characterized in that** location information which is not contained in the first data base (62) and/or for which no correlation with data from the first data base (62) is possible, is stored in a second data base (64) which is assigned to the decoding device (60).

18. System (1) for encoding, decoding and transmitting location information, **characterized in that** the system has an encoding device (20) according to one of Claims 13 to 14, and a decoding device (60) according to one of Claims 15 to 17.

## Revendications

1. Procédé de codage, de décodage et/ou de transmission d'informations de lieu, les informations de lieu étant codées, décodées et/ou transmises dans un paquet de données (400) et renfermant aussi bien des informations de localisation (450) que des informations descriptives,
**caractérisé en ce que**
le paquet de données (400) contient des informations de localisation (450) et des informations descriptives (470) séparées, et
le paquet de données (400) présente des informations d'association (460) permettant d'associer au moins une partie des informations de localisation (450) à au moins une partie des informations descriptives (470).

2. Procédé selon la revendication 1,
**caractérisé en ce que**
les informations de localisation (450) renferment au moins une première chaîne de coordonnées (451), la première chaîne de coordonnées (451) renfermant au moins un premier point (454) en particulier géographique.

3. Procédé selon la revendication 2,
**caractérisé en ce que**
la première chaîne de coordonnées (451) renferme un deuxième point (455), le premier point (454) de la première chaîne de coordonnées (451) étant indiqué sous forme de coordonnées absolues et le deuxième point (455) de la première chaîne de coordonnées (451) sous forme de coordonnées relatives, en particulier par rapport à une coordonnée de centre de gravité ou par rapport au premier point (454) de la première chaîne de coordonnées (451).

4. Procédé selon la revendication 3,
**caractérisé en ce que**
le premier point (454) de la première chaîne de coordonnées (451) est interprété au moyen du deuxième point (455) de la première chaîne de coordonnées (451) dans une direction définie.

5. Procédé selon l'une des revendications précédentes,
**caractérisé en ce que**
les informations descriptives (470) renferment au moins un premier champ d'attribut (471).

6. Procédé selon la revendication 5,
**caractérisé en ce que**
le premier champ d'attribut (471) renferme une indication de type (474) et une indication descriptive (475), l'indication descriptive (475) étant déterminée par l'indication de type (474), en particulier en ce qui concerne le nom, la précision, la direction, l'heure, un POI (Point of Interest) et/ou la liaison physique.

7. Procédé selon l'une des revendications 2-6,
**caractérisé en ce que**
les informations d'association (460) renferment au moins une première saisie d'association (461), le premier champ d'attribut (471) et le premier point (454) de la première chaîne de coordonnées (450) étant associés l'un à l'autre au moyen de la première saisie d'association (461).

8. Procédé selon la revendication 7,
**caractérisé en ce que**
la première saisie d'association (461) renferme aussi bien une référence au premier champ d'attribut (471) qu'une référence au premier point (454) de la première chaîne de coordonnées (451).

9. Procédé selon la revendication 7 ou 8,
**caractérisé en ce que**
la première saisie d'association (461) renferme soit aussi bien une référence au premier champ d'attribut (471) qu'une référence à une multitude de points (454 à 459) de chaînes de coordonnées (451, 452) des informations de localisation (450), soit aussi bien une référence à une multitude de champs d'attribut (471, 472) qu'une référence au premier point (454) de la première chaîne de coordonnées (451).

10. Procédé selon l'une des revendications précédentes,
**caractérisé en ce que**
le paquet de données (400) prévoit une partie tête (420) des informations de lieu et une partie données (440) des informations de lieu.

11. Procédé selon la revendication 10,
**caractérisé en ce que**
la partie tête (420) renferme des informations structurelles (422) et des spécifications d'interprétation (424), les informations structurelles (422) permettent d'indiquer la structure de données des informations de lieu et les spécifications d'interprétation (424) permettant d'indiquer l'objet des informations de lieu.

12. Format de données pour le codage, le décodage et la transmission d'informations de lieu destinées à être utilisées dans un dispositif selon l'une des revendications 13-18,
**caractérisé en ce que**
le format de données renferme des informations de localisation (450) et des informations descriptives (470) séparées, et
il présente des informations d'association (460) pour associer au moins une partie des informations de localisation (450) à au moins une partie des informations descriptives (470).

13. Dispositif de codage (20) pour le codage d'informations de lieu,
**caractérisé en ce que**
des moyens codent des informations de lieu dans un paquet de données qui contient des informations de localisation (450) et des informations descriptives (470) séparées, et
le paquet de données (400) présente des informations d'association (460) pour associer au moins une partie des informations de localisation (450) à au moins une partie des informations descriptives (470).

14. Dispositif de codage (20) selon la revendication 13,
**caractérisé en ce que**
la définition d'au moins le premier point (454) de la première chaîne de coordonnées (451) peut être définie en fonction d'une demande d'informations de lieu (200).

15. Dispositif de décodage (60) pour le décodage d'informations de lieu,
**caractérisé en ce que**
des moyens décodent des informations de lieu codées dans un paquet de données (400), le paquet de données renfermant des informations de localisation (450) et des informations descriptives (470) séparées, et
le paquet de données (400) présente des informations d'association (460) pour associer au moins une partie des informations de localisation (450) à au moins une partie des informations descriptives (470).

16. Dispositif de décodage (60) selon la revendication 15,
**caractérisé en ce que**
les informations de lieu peuvent être mises en corrélation, du moins en partie, avec des données d'une première base de données (62) associée au dispositif de décodage (60).

17. Dispositif de décodage (60) selon la revendication 16,
**caractérisé en ce que**
des informations de lieu non contenues dans la première base de données (62) et/ou pour lesquelles aucune corrélation avec des données de la première base de données (62) n'est possible, sont enregistrées dans une deuxième base de données (64) associée au dispositif de décodage (60).

18. Système (1) pour le codage, le décodage et la transmission d'informations de lieu,
**caractérisé en ce que**
le système présente un dispositif de codage (20) selon l'une quelconque des revendications 13 ou 14 et un dispositif de décodage (60) selon l'une quelconque des revendications 15 à 17.
